Europäisches Patentamt

European Patent Office

Office européen des brevets

(19)

(11) **EP 0 727 676 B1**

## (12) EUROPEAN PATENT SPECIFICATION

(45) Date of publication and mention
of the grant of the patent:
**17.03.1999 Bulletin 1999/11**

(21) Application number: **95929272.3**

(22) Date of filing: **24.08.1995**

(51) Int Cl.6: **G01S 7/40**, G01S 13/50,
G01S 3/74

(86) International application number:
**PCT/RU95/00182**

(87) International publication number:
**WO 96/07930 (14.03.1996 Gazette 1996/12)**

(54) **MULTICHANNEL RADAR**

MEHRKANALRADAR

RADAR MULTICANAUX

(84) Designated Contracting States:
**BE CH DE FR GB IT LI NL SE**

(30) Priority: **02.09.1994 RU 94032128**

(43) Date of publication of application:
**21.08.1996 Bulletin 1996/34**

(73) Proprietor: **Konstruktorskoe Bjuro
Mashinostroenia
Moskovskaya obl., Kolomna, 140402 (RU)**

(72) Inventors:
- **KASHIN, Valery, Mikhailovich ul. Oktyabrskoi
  Kolomna, 140406 (RU)**
- **KHARKIN, Vladimir Sergeevich
  Kolomna, 140404 (RU)**
- **RYZHOV, Vladimir Ivanovich
  Kolomna, 140411 (RU)**
- **CHEKULAEV, Vladimir Alexandrovich
  Kolomna, 140402 (RU)**
- **SEMILETNIKOV, Viktor Pavlovich
  ul. Oktyabrskoi
  Kolomna, 140406 (RU)**
- **TIMOFEEV, Vladimir Ivanovich
  Kolomna, 140406 (RU)**

- **STULOV, Valentin Alexandrovich
  ul. Oktyabrskoi
  Kolomna, 140406 (RU)**
- **VOSKRESENSKY, Sergei Vitalievich
  Kolomna, 140404 (RU)**

(74) Representative:
**Prechtel, Jörg, Dipl.-Phys. Dr. et al
Patentanwälte,
H. Weickmann, Dr. K. Fincke,
F.A. Weickmann, B. Huber,
Dr. H. Liska, Dr. J. Prechtel,
Dr. B. Böhm, Dr. W. Weiss,
Kopernikusstrasse 9
81679 München (DE)**

(56) References cited:
**DE-A- 3 908 771          DE-B- 1 766 666
FR-A- 2 599 856          GB-A- 1 201 675
US-A- 3 471 855          US-A- 3 573 826
US-A- 4 905 010**

- **MICROWAVE JOURNAL, FEB. 1988, USA, vol.
  31, no. 2, ISSN 0026-2897, pages 139-140, 142,
  146 - 151, 154 - 155, XP002027257 HORNER D W:
  "Specification, calibration and testing of phase
  interferometers"**

## Description

The invention relates to the locator to find out direction from which the electromagnetic waves arrive and is useful in the radars employing the phase-sensing method to measure angular co-ordinates of the moving objects.

A radar to measure the co-ordinates of moving targets has been provided (see e.g German patent No 24 29 072 Int. Cl. GO1S 13/50).

Said device includes a transmitting antenna, a microwave radiation source, a receiving antenna and several receiving channels connected in turn by means of a switch.

The disadvantage of said device is the sequential mode of operation limiting the capabilities of the radar when working with high-velocity objects.

A radar device is known to measure distances between an interrogating radar and remote radar transponders by a phase method (see patent GB 1201675 IC GO1S 7/40). Said device incorporates a transceiving antenna and feeder arrangement, a transmitter, a receiver, a circulator, a selective switch, a phase-calibrated oscillator, mixer of intermediate frequency, bandpass filters, a phase meter, a calibrating signal oscillator, a calibrating signal transmission line, a linkage device between the antenna and feeder arrangement and the calibrating signal transmission line.

The disadvantage of said device is a sequential operation of the calibration-measurement cycle for each receiving section of intermediate frequency that limits the device speed and does not provide for calibration in the course of tracking objects without an active transponder.

The signal reflected from said objects is characterized by a Doppler frequency shift, that's why the frequency of the signal received will differ from that of the calibrating signal.

A system to calibrate the simultaneously operating receiving channels both in amplitude and phase has been known (see US patent № 3.471.855 IC GO1S 7/40). Said device includes a multi-channel antenna and feeder arrangement, a multi-channel frequency converter, a calibrating signal oscillator, a calibrating signal transmission line, a linkage device between the antenna and feeder arrangement and the calibrating signal transmission line, an oscillator of the second intermediate frequency, a phase-calibrated oscillator, mixers of intermediate frequency, a phase and amplitude comparison circuit, an amplifier of the first intermediate frequency. Signals from the mixer output and the comparison circuit are fed into a signal processor. Said device determines the phase stability of the signal of each receiving channel with respect to a stable reference signal.

The relative phase instability of the receiving channels is not directly measured by said device. This leads to an increase in error measurement of the relative phase instability of the receiving channels thus displaying a disadvantage of said device.

When operating on a high-velocity object this device is limited in its speed because of the sequential operating principle of the circuit comparing both the phase and amplitude during the calibration process, it being yet another demerit of said device. When operating on a high-velocity object the frequency of the reflected signal is changed that's why the phase responses of the receiving channels affect calculation of the current relative phase shifts in the receiving channels. As indicated in the description of said patent this calibration system for operation on the high-velocity objects can be used only as a frequency and amplitude reference for the Doppler signal processing and not as an instrument to measure the relative phase instability of the receiving channels. A multi-channel radar station with self-calibration of the receiving amplification channels is known.

A multi-channel radar with self calibration of the receiving amplification channels is known (see e.g. T.M.Andreeva "Radar systems for tracking the low-flying targets", Moscow, VNIIPI, 1990, 25 pp.61-63).

Said device comprises a series connection of a multichannel receiving antenna and feeder arrangement, a multichannel frequency convertor, a reference channel receiver with the latter's oscillator input coupled to the output of the oscillator, arid the measurement channel receiver connected to the second output of the frequency convertor, the former comprising a first mixer, a signal processor, a transmitter and a passive divider, a controlled attenuation circuit, a calibration signal transmission line, a linkage device between the antenna arid feeder arrangement and the calibration signal transmission line, and a switch coupled to the first output of the signal processor.

The device uses self-calibration of the receiving amplification channels to subsequently compensate for the amplitude and phase nonidentities over the channels.

The disadvantage of said device lies in dependence of the phase difference value between the signals from the receiving channels' outputs on not only the angular target position but also phase-frequency characteristics of the channels as a result of Doppler frequency shift in the signal reflected from the moving target thus limiting possible potential of the radar operation on the high-velocity targets.

It is an object of the invention, as defined in claim 1, to eliminate the dependence of the measurement accuracy of the arriving wave phase on the Doppler frequency shift of the reflected signal at the velocity variance of the located object by means of self-calibration of the radar receivers in operation by a calibration signal the frequency of which is shifted relative to the carrier by the current Doppler frequency of the signal reflected from the located object and followed by compensating for the phase and frequency nonidentities over the channels.

This object is accomplished by incorporating into the device a Doppler frequency synthesizer, a series connection to the reference channel receiver' output of a multichannel Doppler filter, a detector and an interval meter with the output connected to the first input of the signal processor, a series connection to the multichannel Doppler filter's output of a multiplexer, an oscillator frequency convertor the second input thereof is connected to the oscillator's output, a power divider, the second mixer with its signal input connected to the first output of the frequency convertor, a bandpass filter, an amplifier, a phase meter the output of which is coupled to the second input of the signal processor while the second output of the power divider is connected to the oscillator input of the first mixer, the output of the measurement channel receiver is connected to the second input of the phase meter, the output of the Doppler frequency synthesizer is coupled to the second input of the switch, the output thereof is connected to the control input of the controlled attenuation circuit, the output of the passive divider is connected via the controlled attenuation circuit and the calibration signal transmission line to the linkage device between the antenna and feeder arrangement and the calibration signal transmission line, the control input of the Doppler frequency synthesizer is connected to the second output of the signal processor, the third output thereof is coupled to the control input of the multiplexer.

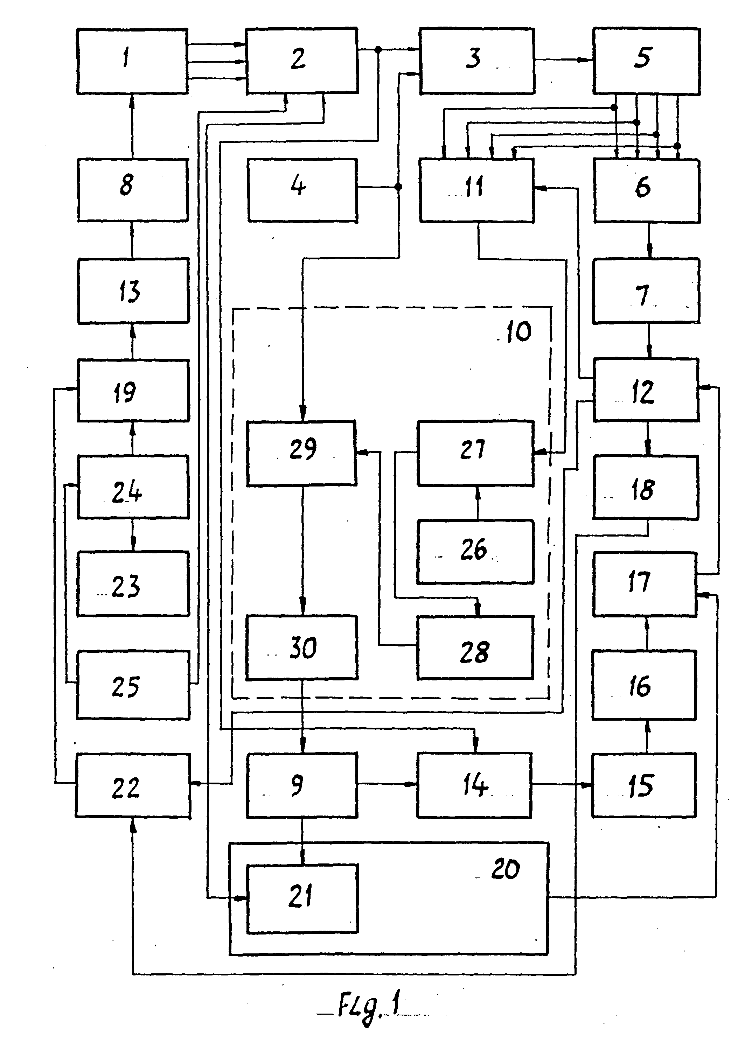

Fig. 1 shows a functional block diagram of the configuration of the device applied for.

Said device includes a series connection of a multichannel receiving antenna and feeder arrangement 1, a multichannel frequency convertor 2, a reference channel receiver 3 with the oscillator input connected to the output of the oscillator 4, a multichannel Doppler filter 5, a detector 6, an interval meter 7, a signal processor 12, a switch 22 with its second signal input connected to the output of the Doppler frequency synthesizer 18, a controlled attenuation circuit 19, a calibration signal transmission line 13, a linkage device 8 between the antenna and feeder arrangement and the calibration signal transmission line.

Said device also comprises a series connection to the multichannel Doppler frequency filter 5's output of a multiplexer 11, an oscillator frequency convertor 10 with the second input connected to the output of the oscillator 4, a power divider 9, the second mixer 14 with the signal input coupled to the first output of the frequency convertor 2, a bandpass filter 15, an amplifier 16, a Phase meter 17 with the output connected to the second input of the signal processor 12 the second output thereof is connected to the input of the Doppler frequency synthesizer 18 and the third output connected to the control input of the multiplexer 11. Said device also includes a measurement channel receiver 20 with the signal input connected to the second output of the frequency convertor 2, and the first mixer 21 is connected to the second output of the power divider 9 via the oscillator input while the output of the receiver 20 of the measurement channel is coupled to the second input of the Phase meter 17. Said device also incorporates a series connection of a transmitter 25, a Passive divider 24, a transmitting antenna and feeder arrangement 23 whereas the second output of the Passive divider 24 is connected to the signal input of the controlled attenuation circuit 19, the second output of the transmitter 25 is coupled to the second input of the frequency convertor 2. The convertor 10 of the oscillator frequency can be constructed as a series connection of an intermediate frequency oscillator 26, the third mixer 27, a rejection filter 28, the forth mixer 29, the second bandpass filter 30 with the output connected to the input of the power divider 9 while the signal input of the third mixer 21 is coupled to the output of the multiplexer 11, the oscillator input of the forth mixer 29 is connected to the output of the oscillator 4.

Said device operates as follows:

The transmitter 25's signal reflected from the target is received by the multichannel receiving antenna and feeder arrangement 1. After converting the frequency in the section 2 to fПд and in the section 3 to the zero intermediate frequency the signal Passes through the multichannel Doppler filter 5. If at the output the signal from the detector 6 exceeds the given level of the threshold voltage the interval meter 7 is triggered. At the second detection of the signal from the target at the output of the filter 5 when the target Passes through the next space zone gated the interval meter 7 completes the measurement of the time period of the target flying over the given distance range and this data arrives to the input of the signal processer connecting the output of the worKing filter of the section 5 via the multiplexer 11 to the input of the oscillator frequency convertor 10, the output thereof generates a signal

$$f_\Gamma = f_{П\Ч 1} - f_{П\Ч 2} - f_\Д,$$

where $f_{П\Д}1$ is the first intermediate frequency generated by the oscillator 4;
$f_{П\Д}2$ is the second intermediate frequency;
$f_\Д$ is the Doppler frequency shift.

The signal processor switches the radar to the self-calibration mode, to this end it also triggers the Doppler frequency synthesizer 18, the output signal thereof controls via the switch 22 the transmission factor of the controlled attenuation circuit 19, at the output thereof is generated a spectral signal component with a frequency shifted relative to the carrier by the Doppler frequency measured. This signal, via the sections 13 and 8, enters the section 1, and then after the frequency convertor 2 arrives at the input of the sections 3,14,20 on a frequency $f_{П\Д}1 - f_\Д$. Following the signal pass through the reference channel receiver 3, the section filter 5, the multiplexer 11, the oscillator frequency convertor 10 and the power divider 9 a signal at the oscillator inputs of the mixers 14 and 21

$$f\Gamma = f\Pi Ч1 - f\Pi Ч2 - f\Lambda$$

is generated.

The mixers 14 and 21 generate at their outputs a signal on a frequency $f\Pi\Lambda2$ which filtered and amplified enters the respective inputs of the Phase meter 17. Information about the measured Phase difference between the signals over the channels is fed to the signal Processor 12 and used for further operation. Then the signal processor 12 switches the radar to the Phase measurement mode for which purpose it turns off the switch 22 and measures the current value of the Phase difference at the Phase meter 17's inputs.

The experimental study into the prototype of the device applied for has demonstrated that self-calibrating the radar receivers during operation by a signal on a frequency shifted with respect to the carrier by the current Doppler frequency of the reflected signal and followed by the compensation for the phase and frequency non-identities found out over the channels allows to improve the accuracy in Phase of measuring the Parameters of incoming wave when operating on the high-velocity objects.

The device applied for is useful in radar appliances employing the Phase-sensing method to measure the angular co-ordinates of moving objects.

## Claims

1. A multi-channel radar comprising a series connection of a multi-channel receiving antenna and feeder arrangement (1), a multi-channel frequency converter (2), a reference channel receiver (3) with its oscillator input connected to the output of an oscillator (4), a first output of the frequency converter (2) being connected to the reference channel receiver (3), and a measurement channel receiver (20) connected to a second output of the frequency converter (2) and including a first mixer (21), a multi-channel Doppler filter (5), a detector (6), an interval meter (7), and a signal processor (12) connected in series to the reference channel receiver (3), the radar further comprising a transmitter (25) and a passive divider (24) connected in series, a switch (22), a controlled attenuation circuit (19), a calibration signal transmission line (13), a linkage device (8) between the antenna and feeder arrangement (1) and the calibration signal transmission line (13), the switch (22) being connected to a first output of the signal processor (12), a series connection to the multi-channel Doppler filter's outputs of a multiplexer (11), an oscillator frequency converter (10) with its second input connected to the oscillators output, a power divider (9), a second mixer (14) with its signal input connected to the first output of the frequency converter (2), a bandpass filter (15), an amplifier (16), and a phase meter (17) with its output connected to a second input of the signal processor (12), a Doppler frequency synthesizer (18) being connected to a second output of the signal processor (12) while a second output of the power divider (9) is connected to the oscillator input of the first mixer (21), the output of the measurement channel receiver (20) is coupled to a second input of the phase meter (17), the output of the Doppler frequency synthesizer (18) is connected to the second input of the switch (22) with the latter's output connected to the control input of the controlled attenuation circuit (19), the output of the passive divider (24) is connected via the controlled attenuation circuit (19) and the calibration signal transmission line (13) to the linkage device (8) between the antenna and feeder arrangement (1) and the calibration signal transmission line (13), and a third output of the signal processor (12) is connected to the control input of the multiplexer (11).

2. The system of claim 1 wherein said oscillator frequency convertor (10) comprises a series connection of an intermediate frequency oscillator (26), a third mixer (27), a rejection filter (28), a forth mixer (29), a second bandpass filter (30) with its output connected to the input of the power divider (9) whereas the oscillator input of the forth mixer (29) is connected to the oscillator's output and the signal input of the third mixer (27) is connected to the multiplexer's output.

## Patentansprüche

1. Ein Mehrkanalradar bestehend aus einer Reihenschaltung von einer einer mehrkanaligen Empfangsantennenanlage mit Antennenkabel (1), einem mehrkanaligen Frequenzwandler (2), einem Referenzkanalempfänger (3), dessen Überlagerungseingang an einen Ausgang eines Oszillators (4) angeschlossen ist, dabei ist ein erster Ausgang des Frequenzwandlers (2) an den Referenzkanalempfänger (3) und ein Meßkanalempfänger (20) an einen zweiten Ausgang des Frequenzwandlers (2), sowie einschließlich einen ersten Mischer (21), einen mehrkanaligen Dopplerfrequenzfilter (5), einen Detektor (6), einen Perioden messer (7), einen Signalprozessor (12), geschaltet in Reihe an den Referenzkanalempfänger (3), das Radar hat weiterhin eine Reihenschaltung von einem Sender (25) und einem passiven Teiler (24), sowie einen Schalter (22), einen Steuerdämpfungskreis (19), eine Leitung (13) zur Eichsignalübertragung, eine Verbindungsanlage (8) zwischen der Antennenanlage mit Antennenkabel (1) und der Leitung (13) zur Eichsignalübertragung, dabei ist der Schalter (22) an einen ersten Ausgang des Signalprozessors (12) angeschlossen, sowie eine Reihenschaltung an einen Ausgang des mehrkanaligen Dopplerfrequenzfilters (5) von einem Multiplexer (11), einem Überlagerungsfrequenzwandler (10), dessen zweiter Eingang an den Oszillatorenausgang (4) angescholssen ist, einem Leistungsteiler (9), einem zweiten Mischer (14), dessen Signaleingang mit einem ersten Ausgang des Frequenzwandlers (2) verbunden ist, einem Bandfilter (15), einem Verstärker (16), einem Phasenmesser (17) mit seinem an einen zweiten Eingang des Signalprozessors (12) angeschlossenen Ausgang, der Dopplerfrequenz-Synthesator (18) ist an einen zweiten Ausgang des Signalprozessors (12) angeschlossen, dabei ist ein zweiter Ausgang des Leistungsteilers (9) an einen Überlagerungseingang des ersten Mischers (21), ein Ausgang des Meßkanalempfängers (20) an einen zweiten Eingang des Phasenmessers (17) angeschlossen, ein Ausgang des Dopplerfrequenz-Synthesators (18) ist mit einem zweiten Eingang des Schalters (22) verbunden, dessen Ausgang an einen Kontrolleingang des Steuerdämpfungskreises (19) angeschaltet ist, ein Ausgang des passiven Teilers (24) ist durch den Steuerdämpfungskreise (19) und die Leitung (13) zur Eichsignalübertragung mit der Verbindungsanlage (8) zwischen der Antennenanlage mit Antennenkabel (1) und der Leitung (13) zur Eichsignalübertragung verbunden, ein dritter Ausgang des Signalprozessors (12) ist an einen Kontrolleingang des Multiplexers (11) angeschlossen.

**2.** Die Vorrichtung nach Anspruch 1, deren Überlagerungsfrequenzwandler (10) eine Reihenschaltung von einem Zwischenfrequenzgenerator (26), einem dritten Mischer (27), einem Sperrfilter (28), einem vierten Mischer (29), einem zweiten Bandfilter (30) aufweist, dessen Ausgang an einen Eingang des Leistungsteilers (9) angeschlossen ist, wobei ein Überlagerungseingang des vierten Mischers (29) mit einem Ausgang des Oszillators (4) und ein Signaleingang des dritten Mischers (27) mit einem Ausgang des Multiplexers (11) verbunden sind.

## Revendications

**1.** Radar multicanaux comportant une connexion en série d'un bloc d'antenne multicanaux de réception à feeder (1), d'un convertisseur multicanaux de fréquence (2), d'un récepteur de canal de référence (3) dont une entrée d'hétérodyne est raccordée à une sortie d'une hétérodyne (4), en cela une première sortie du convertisseur de fréquence (2) est connectée au récepteur de canal de référence (3), et un récepteur de canal de mesure (20) est connecté à une deuxième sortie du convertisseur de fréquence (2) et y compris un premier mélangeur (21), un filtre Doppler multicanaux (5), un détecteur (6), un mesureur d'intervalles (7) et un processeur de signal (12) connectés en série au récepteur de canal de référence (3), radar comportant ensuite un émetteur (25) et un diviseur passif (24) connectés en série ainsi qu'un commutateur (22), un circuit d'affaiblissement commandé (19), une ligne de transmission de signal de calibrage (13), un dispositif de liaison (8) entre le bloc d'antenne à feeder (1) et la ligne de transmission de signal de calibrage (13), en cela le commutateur (22) est connecté à une première sortie du processeur de signal (12), de même une connexion en série à une sortie du filtre Doppler multicanaux (5) d'un multiplexeur (11), d'un convertisseur de fréquence d'hétérodyne (10) dont une deuxième entrée est connectée à une sortie de l'hétérodyne (4), d'un diviseur de puissance (9), d'un deuxième mélangeur (14) dont une entrée de signal est connectée à une première sortie du convertisseur de fréquence (2), d'un filtre à bande (15), d'un amplificateur (16) et d'un phasemètre (17) dont une sortie est connectée à une deuxième entrée du processeur de signal (12), un synthétiseur de fréquences Doppler (18) est raccordé à une deuxième sortie du processeur de signal (12), en cela une deuxième sortie du diviseur de puissance (9) est connectée à une entrée d'hétérodyne du premier mélangeur (21), une sortie du récepteur de canal de mesure (20) est raccordée à une deuxième entrée du phasemètre (17), une sortie du synthétiseur de fréquences Doppler (18) est connectée à une deuxième entrée du commutateur (22) dont une sortie est connectée à une entrée de contrôle du circuit d'affaiblissement commandé (19), une sortie du diviseur passif (24) est connectée, à travers le circuit d'affaiblissement commandé (19) et la ligne de transmission de signal de calibrage (13), au dispositif de liaison (8) entre le bloc d'antenne à feeder (1) et la ligne de transmission de signal de calibrage (13), et une troisième sortie du processeur de signal (12) est connectée à une entrée de contrôle du multiplexeur (11).

**2.** Dispositif selon la revendication 1, caractérisé par le fait que le convertisseur de fréquence d'hétérodyne (10) comporte une connexion en série d'un générateur de fréquence intermédiaire (26), d'un troisième mélangeur (27), d'un filtre coupe-bande (28), d'un quatrième mélangeur (29), d'un deuxième filtre à bande (30) dont une sortie est connectée à une entrée du diviseur de puissance (9), en cela une entrée d'hétérodyne du quatrième mélangeur (29) est connectée à une sortie d'hétérodyne, et une entrée de signal du troisième mélangeur (27) est connectée à une sortie de multiplexeur.

_Fig.1_